# EUROPEAN PATENT APPLICATION

(11) **EP 3 258 564 A1**
(43) Date of publication of application: **20.12.2017**
(21) Application number: 16174513.8
(22) Date of filing: 15.06.2016
(51) Int. Cl.: H02H 9/02, H01C 7/10, H01H 33/16, H02H 9/04

(54) **BRAKING RESISTOR AND FAULT COMPENSATION SYSTEM FOR A SUBSTATION**

(71) Applicant: ABB Schweiz AG, 5400 Baden (CH)
(72) Inventor: ÅKESSON, Ulf, 771 42 Ludvika (SE)
(74) Representative: Helin, William

(57) **Abstract**

The present disclosure relates to a braking resistor (1; 1'; 1") for a high voltage substation. The braking resistor (1; 1'; 1") comprises a support structure (3), a support insulator (5), the support structure (5) being configured to support the support insulator (5), and a braking resistor unit (7) having a first terminal (7a) and a second terminal (7b) and a plurality of series-connected ceramic resistor elements (7d) connected to the first terminal (7a) and to the second terminal (7b), wherein the support insulator (5) is configured to electrically insulate the braking resistor unit (7) from the support structure (3). There is also provided a fault compensation system for a high voltage substation comprising a braking resistor.

## Description

### TECHNICAL FIELD

The present disclosure generally relates to high voltage fault compensation devices. In particular, it relates to a braking resistor and to a fault compensation system including a braking resistor.

### BACKGROUND

In case of a short circuit close to power generation there is a risk for a non-acceptable voltage drop on transmission lines. The acceptable voltage drop is generally set by the grid operator.

A braking resistor is a device that limits the voltage drop. Braking resistors moreover improve transient stability of a power generator by reducing the accelerating torque in the event of a fault.

A braking resistor is connectable to the local power network by means of a circuit breaker. There are generally two types of braking resistors, namely shunt braking resistors and series braking resistors.

A shunt braking resistor is switched into the power network by setting a circuit breaker connected to the power network and to the shunt braking resistor in its closed state.

A series braking resistor is connected in parallel with the circuit breaker and is switched into the power network by setting the circuit breaker in its open state. In this manner current is directed to flow through the braking resistor. Series braking resistors are preferable for voltage drop limitation because they contribute as soon as they are connected to the power network.

Braking resistors for high voltage applications may be dimensioned to absorb power up to the order of 1000's of mega watts (MW) and are therefore generally extremely large devices.

An example of a braking resistor for high voltage applications is disclosed in the publication entitled "Bonneville power administration 1400 MW braking resistor", by M.L. Shelton et al., published in IEEE Transactions on Power Apparatus and Systems, Vol. 94, issue 2, March 1975, pp. 602-611. This document discloses a braking resistor where each phase of the braking resistor is supported on a suspension tower body approximately 90 feet, or about 9.1 meter, in height. Furthermore, each phase of the braking resistor is formed by 14 700 feet, or about 4480 meters, of ½ inch, or about 12.7 millimetre, 19-strand stainless steel wire zig-zagged around the tower in 60 feet, or about 18 meter, vertical loops.

A more modern approach to a braking resistor is disclosed in "Application of a 138 kV 200 MW braking resistor" by D.F. Peelo et al., published in Power Engineering Journal, August 1994, pp. 188-192. This document discloses that for each phase the braking resistor consists of 20 cast iron grid type resistors connected in series. Each resistor is housed in a separate louvred aluminium enclosure. The entire assembly is supported by a very large platform.

### SUMMARY

An object of the present disclosure is to provide a braking resistor for high voltage applications which is more compact than existing braking resistors for such applications.

There is hence according to a first aspect of the present disclosure provided a braking resistor for a high voltage substation, wherein the braking resistor comprises: a support structure, a support insulator, the support structure being configured to support the support insulator, and a braking resistor unit having a first terminal and a second terminal and a plurality of series-connected ceramic resistor elements connected to the first terminal and to the second terminal, wherein the support insulator is configured to electrically insulate the braking resistor unit from the support structure.

The ceramic resistor elements are capable to absorb large amounts of energy. In particular, they are able to absorb much larger quantities of energy per volume unit than the above-described resistive elements. This makes the entire braking resistor unit much more compact. The ceramic resistor elements may thus be housed in a single braking resistor unit, supported by a support structure and insulated from the support structure by means of the support insulator which is configured to be mounted to a planar surface such as ground.

As an example, an existing standard SF6 high voltage circuit breaker enclosure may be utilised as the structure in which the series-connected ceramic resistor elements are housed. Such structures are much more compact than prior art braking resistors. To this end, the support insulator and the support structure may according to one variation be those of a standard high voltage circuit breaker for substations and the entire braking resistor may have the visual appearance of a standard circuit breaker, such as a three-column support stand circuit breaker or a pole-beam support circuit breaker. Thereby, no new concession of the product is required, because the concession for circuit breakers is valid also for a braking resistor with the same mechanical design.

According to one embodiment the braking resistor unit comprises a hollow insulator housing and wherein the plurality of series-connected ceramic resistor elements are arranged inside the insulator housing.

According to one embodiment the ceramic resistor elements fill at least 70% of the entire interior volume of the insulator housing. This ensures that the braking resistor is able to absorb very large amounts of energy for a relatively long time, in the order of several 100 milliseconds.

According to one embodiment the insulator housing of the braking resistor unit has an elongated cylindrical shape provided with a plurality of sheds arranged one after the other in the longitudinal direction of the insulator housing.

According to one embodiment the insulator housing is a composite insulator housing.

According to one embodiment the first terminal is provided at one end and the second terminal is provided at the other end of the insulator housing.

According to one embodiment the insulator housing of the braking resistor unit is filled with an electrically insulating fluid.

According to one embodiment the insulating fluid is a gas.

According to one embodiment the insulating fluid is SF₆.

According to one embodiment the support insulator comprises a hollow insulator housing.

According to one embodiment the insulator housing of the support insulator has an elongated cylindrical shape provided with a plurality of sheds arranged one after the other in the longitudinal direction of the insulator housing.

According to one embodiment the insulator housing of the support insulator is filled with an electrically insulating fluid at the same pressure as the electrically insulating fluid in the insulator housing of the braking resistor unit.

According to one embodiment the insulating fluid is SF₆.

According to one embodiment the support structure is a three-column support stand configured to be mounted to ground to carry the braking resistor or a pole-beam support provided with two support legs configured to be mounted to ground to carry the braking resistor.

There is according to a second aspect of the present disclosure provided a fault compensation system for a high voltage substation, comprising: a circuit breaker operable between a closed state and an open state, and a braking resistor according to the first aspect presented herein, wherein the circuit breaker is configured to operate as a bypass of the braking resistor in the closed state and to connect the braking resistor to a power network of the substation when the circuit breaker is in the open state.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows an example of a braking resistor;
Figs 2 and 3 show side view of examples of braking resistors; and
Figs 4a and 4b shows a diagram of a braking resistor in a power network.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The present disclosure relates to a braking resistor for high voltage applications. In particular, the braking resistor is configured for use in a high voltage substation environment. With high voltage is generally meant a voltage starting 1 kV. In the applications of the present braking resistor, however, with high voltage is generally means a voltage from 70 kV and above, for example at least 200 kV or at least 400 kV.

The braking resistor includes a braking resistor unit comprising a first terminal and a second terminal and a plurality of series-connected ceramic resistor elements connected between the first terminal and the second terminal, a support insulator and a support structure. The support insulator is configured to insulate the braking resistor unit from the support structure. The support structure is configured to carry the entire braking resistor, in particular the braking resistor unit and the support insulator, and configured to be mounted to a planar surface.

For each electrical phase, the braking resistor generally only has one braking resistor unit and one support insulator. The support structure may support one or more electrical phases.

The braking resistor disclosed herein independently forms a braking resistor for high voltage use. To this end, it does not need to form part of a braking resistor assembly comprising a plurality of stand-alone series-connected braking resistor. Hereto, the disclosed braking resistor is a device that in its own right, independently, operates as a braking resistor in a high voltage environment. This functionality can be obtained due to the high energy absorption capability of the ceramic resistor elements.

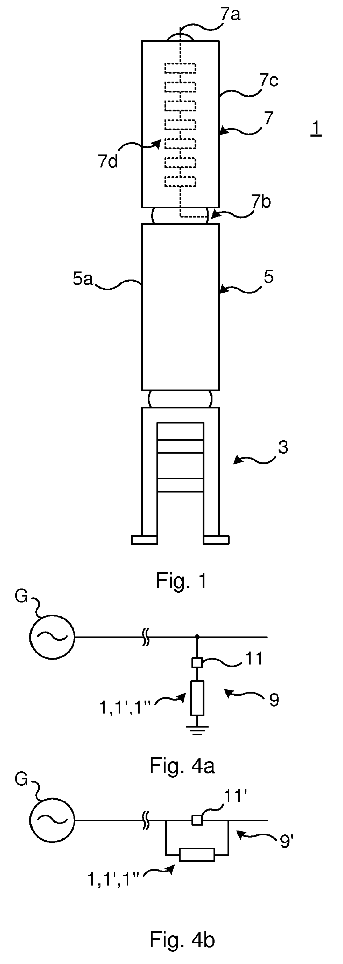

Turning now to Fig. 1, a schematic general example of a braking resistor is shown, in particular of a single pole braking resistor, i.e. for a single electrical phase. Braking resistor 1 has a support structure 3, a support insulator 5 and a braking resistor unit 7. The support structure 3 is preferably made of metal such as steel. The support structure 3 is configured to be mounted to ground or other planar structure.

The support insulator 5 is configured to electrically insulate the braking resistor unit 7 from the support structure 5. The support insulator 5 is hence arranged between the braking resistor unit 7 and the support structure 3.

The braking resistor unit 7 has a first terminal 7a and a second terminal 7b. The first terminal 7a and the second terminal 7b are configured to be connected to a circuit breaker, thereby enabling connection of the braking resistor unit 7 to a power network of a substation.

The braking resistor unit 7 also includes a hollow insulator housing 7c and a plurality of ceramic resistor elements 7d, or ceramic resistor blocks. The ceramic resistor elements 7d are connected in series and to the first terminal 7a and the second terminal 7b. Hereto, the first terminal 7a is directly connected to one of the ceramic resistor elements 7d and the second terminal 7b is directly connected to another one of the ceramic resistor elements 7d. The ceramic resistor elements 7d fill at least 70% of the entire interior volume of the hollow insulator housing 7c, for example at least 80% of the entire interior volume of the insulator housing 7c. According to one example, the ceramic resistor elements 7d fill between 75-90% of the entire interior volume of the insulator housing 7c, for example 80-90%.

The energy absorption capability of the braking resistor 1 can be dimensioned based on the number of ceramic resistor elements provided in the insulator housing 7c. Moreover, in the design phase the length of the insulator housing 7c may be adapted to the size of all the ceramic resistor elements it must contain. Alternatively, or additionally, if necessary a plurality of resistor stacks, i.e. series-connected ceramic resistor elements or blocks, may be arranged physically in parallel stacks inside the insulator housing 7c.

The insulator housing 7c, or braking resistor unit enclosure, is made of an electrically insulating material with high dielectric strength, for example porcelain or a composite material. The insulator housing 7c is preferably a composite insulator housing. The insulator housing 7c is hermetically sealed and comprises an electrically insulating fluid. According to one variation the electrically insulating fluid is a gas, for example sulphur hexafluoride, SF₆.

The support insulator 5 has a hollow insulator housing 5a. The insulator housing 5a is made of an electrically insulating material with high dielectric strength, for example porcelain or a composite material. The insulator housing 5a is hermetically sealed and comprises an electrically insulating fluid. According to one variation the electrically insulating fluid is a gas, for example SF₆.

The electrically insulating fluid contained in the insulator housing 5a of the support insulator 5 is preferably kept at the same pressure as the electrically insulating fluid in the insulator housing 7c of the braking resistor unit 7.

The support structure 3 is configured to be installed in the ground. The support structure may according to one variation comprise at least one support stand having two legs for attachment or fastening to the ground.

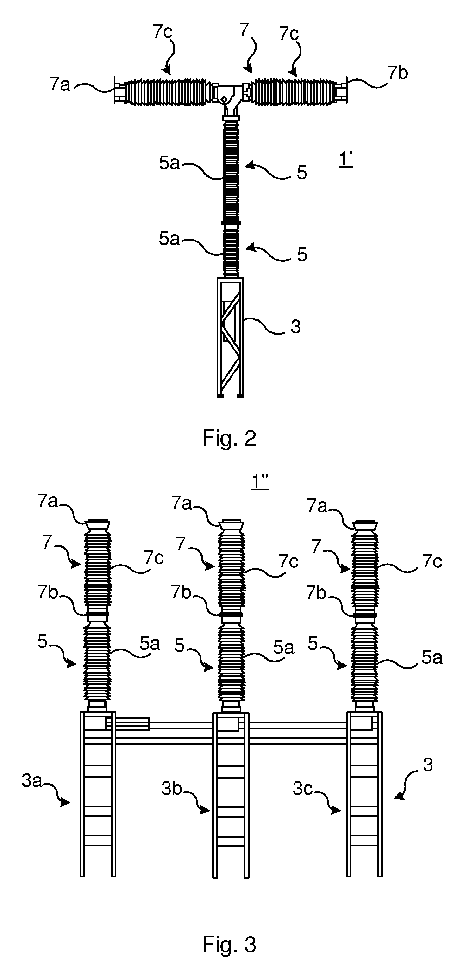

Turning now to Fig. 2, another example of a braking resistor is shown. It should be noted that the exemplified braking resistor 1' shows only one pole thereof, i.e. a one electrical phase. For e.g. three phases, each phase is associated with a respective braking resistor 1'. Braking resistor 1' has the same general structure as braking resistor 1, the difference being in the configuration of the enclosure(s)/support of the device.

Braking resistor 1' has a support structure 3, in the form of a single pole-beam support having an elongated shape in the vertical direction in an installed state. The support insulator 5 comprises two elongated essentially cylindrical insulator housings 5a configured to be stacked and mounted one after the other. Each insulator housing 5a has a plurality of sheds provided along the longitudinal direction of the insulator housing 5a. As previously noted, the insulator housings 5a may be made of for example porcelain or a composite material.

The braking resistor unit 7 includes two insulator housings 7a, arranged on top of the upper insulator housing 5a of the support insulator 5, extending laterally in opposite directions substantially perpendicular to the support insulator 5. Hereto, the braking resistor 1' has a generally T-shaped design. The insulator housings 7c of the braking resistor unit 7 are provided with a plurality of sheds along the longitudinal directions thereof.

Fig. 3 shows another example of a braking resistor. Braking resistor 1" has the same general structure as braking resistor 1, the difference again being in the configuration of the enclosure(s)/support of the device. Braking resistor 1" has a support structure 3 in the form of a three-column support stand. The support structure 3 hence comprises three stands 3a each having an elongated shape in the vertical direction in an installed state. The stands 3a are mechanically linked or connected thereby forming an integrated three-pole braking resistor 1". The braking resistor 1" has three support insulators 5, one for each pole. Each support insulator 5 is arranged on a respective stand 3a of the support structure 3. The braking resistor 1" also has three braking resistor units 7, one for each pole. Each braking resistor unit 7 is arranged on top of a respective support insulator 5. The braking resistor 1" has a generally dual H-shape. The insulator housings 5a of the support insulators are provided with a plurality of sheds in the longitudinal direction thereof. The insulator housings 7c of the braking resistor units 7 are also provided with a plurality of sheds in the longitudinal direction thereof.

The braking resistor according to any example disclosed herein may in the design phase be adapted to the amount of energy it should be able to absorb. In the case of very high performance braking resistors, essentially any number of insulator housings 7c, each comprising ceramic resistor elements 7d, may be connected in series and/or in parallel to obtain the necessary performance.

With reference to Figs 4a and 4b, examples of a fault compensation system are shown. In general, any braking resistor disclosed herein is switched into the electric circuit, or power network, by means of a circuit breaker.

Fig. 4a shows an example a fault compensation system 9 comprising braking resistor 1, 1', 1" and a circuit breaker 11. The braking resistor 1, 1', 1" is here a shunt braking resistor, i.e. the braking resistor 1, 1', 1" is configured to be connectable between a generator G and ground. The circuit breaker 11' is configured to operate the braking resistor, i.e. to switch it into the power network. Normally, the circuit breaker 11' is in an open state, however if a fault such as a short circuit fault occurs, the circuit breaker 11' is set in a closed state by a control unit. The braking resistor 1, 1', 1" will thereby absorb a large amount of energy.

Fig. 4b shows a fault compensation system 9' in which the braking resistor 1, 1', 1" is connectable in series between the generator G and the power network. In this case the circuit breaker 11' is normally set in its closed state, whereby current flows through the circuit breaker 11'. In the event of a fault such as a short circuit fault, a control unit sets the circuit breaker 11' in its open state, whereby current will flow through the braking resistor 1, 1', 1", which thus absorbs a large amount of energy and which essentially immediately limits the voltage drop that would otherwise occur.

Typically, the braking resistor 1, 1', 1" is switched into the electric circuit, i.e. the power network, in the event of a fault for a time that is in the order of 100 milliseconds, for example 200 milliseconds.

The braking resistor 1, 1', 1" may for example have a resistance of about 100 ohm, or in the order of 100 ohm.

The braking resistors disclosed herein may advantageously be used in high voltage environments, for example high voltage substations, in particular in an electrical generation system, close to a high voltage power generation source. It can for example be used in a step-up substation for large thermal power stations or nuclear power plants or in a transmission substation.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A braking resistor (1; 1'; 1") for a high voltage substation, wherein the braking resistor (1; 1'; 1") comprises:
a support structure (3),
a support insulator (5),
the support structure (5) being configured to support the support insulator (5), and
a braking resistor unit (7) having a first terminal (7a) and a second terminal (7b) and a plurality of series-connected ceramic resistor elements (7d) connected to the first terminal (7a) and to the second terminal (7b),
wherein the support insulator (5) is configured to electrically insulate the braking resistor unit (7) from the support structure (3).

2. The braking resistor (1; 1'; 1") as claimed in claim 1, wherein the braking resistor unit (7) comprises a hollow insulator housing (7c) and wherein the plurality of series-connected ceramic resistor elements (7d) are arranged inside the insulator housing (7c).

3. The braking resistor (1; 1'; 1") as claimed in claim 2, wherein the ceramic resistor elements (7d) fill at least 70% of the entire interior volume of the insulator housing (7c).

4. The braking resistor (1; 1'; 1") as claimed in claim 2 or 3, wherein the insulator housing (7c) of the braking resistor unit (7) has an elongated cylindrical shape provided with a plurality of sheds arranged one after the other in the longitudinal direction of the insulator housing (7c).

5. The braking resistor (1; 1'; 1") as claimed in any of claims 2-4, wherein the insulator housing (7c) is a composite insulator housing.

6. The braking resistor (1; 1'; 1") as claimed in any of claims 2-5, wherein the first terminal (7a) is provided at one end and the second terminal (7b) is provided at the other end of the insulator housing (7c).

7. The braking resistor (1; 1'; 1") as claimed in any of claims 2-6, wherein the insulator housing (7c) of the braking resistor unit (7) is filled with an electrically insulating fluid.

8. The braking resistor (1; 1'; 1") as claimed in claim 7, wherein the insulating fluid is a gas.

9. The braking resistor (1; 1'; 1") as claimed in claim 7 or 8, wherein the insulating fluid is SF₆.

10. The braking resistor (1; 1'; 1") as claimed in any of the preceding claims, wherein the support insulator (5) comprises a hollow insulator housing (5a).

11. The braking resistor (1; 1'; 1") as claimed in claim 10, wherein the insulator housing (5a) of the support insulator (5) has an elongated cylindrical shape provided with a plurality of sheds arranged one after the other in the longitudinal direction of the insulator housing (5a).

12. The braking resistor (1; 1'; 1") as claimed in claim 10 or 11 and dependent of claim 7, wherein the insulator housing (5a) of the support insulator is filled with an electrically insulating fluid at the same pressure as the electrically insulating fluid in the insulator housing (7c) of the braking resistor unit (7).

13. The braking resistor (1; 1'; 1") as claimed in claim 12, wherein the insulating fluid is SF₆.

14. The braking resistor (1; 1'; 1") as claimed in any of the preceding claims, wherein the support structure (3) is a three-column support stand configured to be mounted to ground to carry the braking resistor (1") or a pole-beam support (1; 1') provided with two support legs configured to be mounted to ground to carry the braking resistor.

15. A fault compensation system (9') for a high voltage substation, comprising:
a circuit breaker (11') operable between a closed state and an open state, and
a braking resistor (1; 1'; 1") as claimed in any of claims 1-14, wherein the circuit breaker (11') is configured to operate as a bypass of the braking resistor (1; 1'; 1") in the closed state and to connect the braking resistor (1; 1'; 1") to a power network of the substation when the circuit breaker (11') is in the open state.
